# FASCICULE DE BREVET EUROPEEN

(11) **EP 3 624 268 B1**
(45) Date de publication et mention de la délivrance du brevet: **26.05.2021**
(21) Numéro de dépôt: 19196571.4
(22) Date de dépôt: 10.09.2019
(51) Int. Cl.: H01Q 3/46, H01Q 15/14, H01Q 21/00

(54) **PANNEAU RESEAU REFLECTEUR RADIOFREQUENCE POUR ANTENNE DE SATELLITE**
RADIOFREQUENZ REFLEKTARRAY PANEL FÜR EINE SATELLITENANTENNE
RADIOFREQUENCY REFLECTARRAY PANNEL FOR SATELLITE ANTENNA

(30) Priorité: 13.09.2018 FR 1800957
(43) Date de publication de la demande: 18.03.2020
(73) Titulaire: Thales, 92400 Courbevoie (FR)
(72) Inventeur: DAVID, Jean-François, 31100 TOULOUSE (FR); CHINIARD, Renaud, 31100 TOULOUSE (FR)
(74) Mandataire: Marks & Clerk France

(56) Documents cités:
- CN-A- 101 872 905
- CN-A- 106 486 734
- US-A1- 2009 115 680
- US-A1- 2018 166 781

## Description

L'invention porte sur un panneau réseau réflecteur radiofréquence pour antenne de satellite et un réseau réflecteur radiofréquence pour antenne de satellite comprenant au moins un tel panneau.

Il est connu des réflecteurs radiofréquences d'antennes de satellites paraboliques de grandes tailles, par exemple de l'ordre de 6 m de diamètre, qui sont techniquement compliqués et donc de coûts élevés pour satisfaire les exigences fonctionnelles requises par la mission (particulièrement en ce qui concerne la stabilité géométrique en orbite).

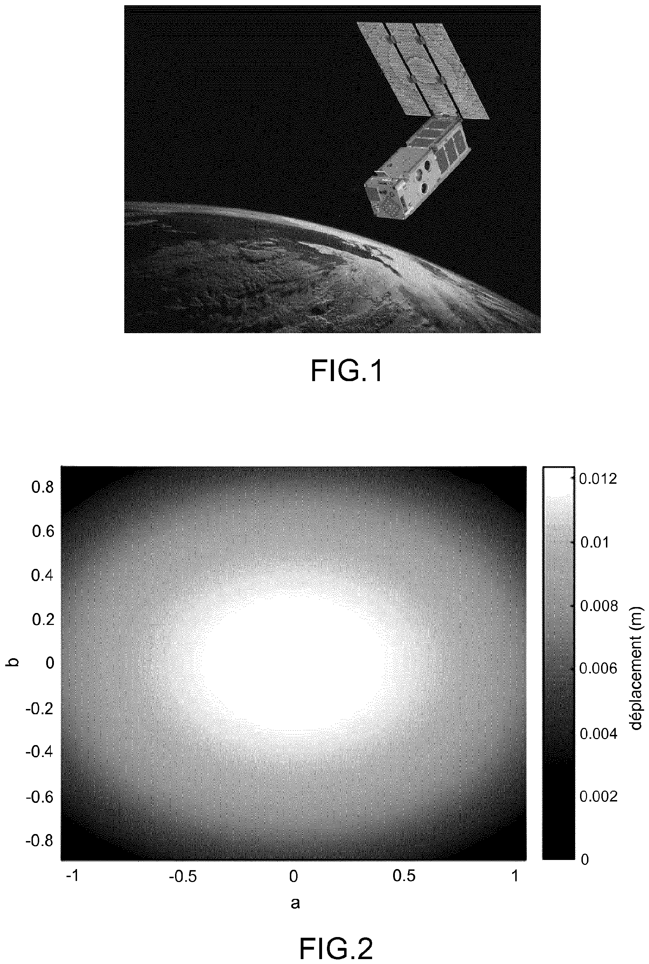

Il est connu des panneaux réseaux réflecteurs, tels qu'embarqués sur le satellite "cubesat", nommé "Integrated Solar Array and Reflectarray Antenna" en langue anglaise, d'acronyme ISARA, comme illustré sur la figure 1.

Il est également connu des démonstrateurs ou prototypes réalisés au sol fonctionnant dans les bandes L à C.

US2018/166781 A1 divulgue un panneau réseau réflecteur comprenant une pluralité de tuiles. Chaque tuile est configurée pour réfléchir les signaux radiofréquences incidents. Des capteurs de température permettent de compenser les déviations liées à la température en apportant une correction en phase aux tuiles.

Cependant, les panneaux plans de l'état de l'art posent un problème de dilatation thermique lorsqu'ils doivent fonctionner en radiofréquences, compte tenu des gradients thermiques existant le long de tels appendices externes.

Par son fonctionnement RF, une configuration utilisant un panneau de type Reflectarray impose une sélection rigoureuse de matériaux diélectriques à faibles pertes RF et faible permittivité.

Ainsi, les matériaux possibles en bandes L à C, sont naturellement orientés sur des laminés à matrices organiques (par exemple de type cyanate ester, poly-imide, ou équivalent, ...) renforcés par des fibres de quartz, de silice ou de verre. Ces matériaux sont certes performants en RF, mais restent peu stables au regard de leur coefficient de dilation thermique (de l'ordre de 10 voire même de 12 ppm/°C) pour des variations de températures constatées en orbite.

Cette gamme de coefficients de dilatation thermique apparait comme trop importante pour garantir le niveau de stabilité géométrique requis pour un produit Reflectarray, afin d'assurer les exigences antennes imposées par les opérateurs de télécoms.

Les gradients thermiques transverses (hors du plan de l'épaisseur du panneau Reflectarray) induisent par "effet bilame" du panneau, des déformées hors du plan notables comme illustrées sur la figure 2.

On entend par effet bilame, le couplage entre dilatations dans le plan et dilatations hors du plan (par couplage membrane/flexion) subséquent à des forts coefficients de dilatation.

Un but de l'invention est de pallier les problèmes précédemment cités, et notamment pour des panneaux de dimensions supérieures à 2m sur 2m.

Il est proposé, selon un aspect de l'invention, un panneau réseau réflecteur radiofréquence pour antenne de satellite, comprenant :
- un support structural ;
- des tuiles radiofréquences supportant des cellules radiofréquences polygonales configurées pour réfléchir et déphaser des signaux radiofréquences incidents ;
- une liaison complète (appelée point fixe), entre le support structural et la tuile radiofréquence ; et
- au moins deux liaisons de type glissière, entre le support structural et la tuile radiofréquence, dans le plan du panneau, d'axes distincts et passant par la liaison complète.

Un tel panneau présente des dilatations limitées et donc compatibles avec les exigences missions de satellites.

Dans un mode de réalisation, la liaison complète peut être disposée au barycentre de la tuile radiofréquence.

Ainsi, les déformations dans le plan de la tuile RF, sous chargement thermique, sont minimisées ce qui présente un avantage certain pour les performances d'antenne.

En variante, la liaison complète peut être disposée au bord de la tuile radiofréquence.

Ainsi, cela peut faciliter certaines configurations de tuile RF (contraintes locales d'aménagement), mais en contrepartie induira des déformées dans le plan plus importantes (en comparaison de la liaison complète localisée au centre de la tuile RF) donc avec des performances antenne plus impactées par le chargement thermique.

Selon un mode de réalisation, le support structural comprend une couche espaceur revêtue de deux peaux en matériau orthotrope drapé, d'épaisseur inférieure à 1 mm, configuré pour assurer un module d'Young équivalent quasi isotrope compris entre 100 et 200 GPa, et un coefficient de dilatation thermique inférieur ou égal à 3 ppm/°C.

Ainsi, il est possible d'assurer la stabilité dimensionnelle requise par la mission, ceci malgré des coefficients de dilatation thermique (ou CTE pour acronyme de "Coefficient of Thermal Expansion") disponibles élevés pour les matériaux diélectriques constitutifs d'une tuile radioélectrique. En effet, sans l'invention, seuls des CTE inférieurs ou égaux à 3 ppm/°C permettraient de garantir ce niveau de stabilité dimensionnelle en orbite. De telles valeurs de CTE restent pour l'heure commercialement indisponibles. Le dispositif de fixation d'une tuile radioélectrique permet de limiter l'effet bilame en interdisant les déformées hors du plan de la tuile RF, par effet de bridage sur le panneau structural. Ainsi, les déformées hors du plan restent limitées à celle du panneau structural c'est-à-dire équivalentes à celles procurées par un CTE équivalent à 3 ppm/°C.

Dans un mode de réalisation, la couche espaceur est en nid d'abeilles, et/ou en assemblage de barres, et/ou en mousse.

Ainsi, la couche espaceur assure une rigidité nécessaire, avec une masse volumique suffisamment limitée.

Selon un mode de réalisation, l'étage RF des cellules radiofréquences (4) comprend un empilement d'une couche diélectrique porteuse, recouverte d'une couche stable radioélectriquement isolante dans une plage étendue de températures comprise entre -130°C et +150°C], comme un laminé de type poly-imide, tel du Kapton (marque déposée).

Dans un mode de réalisation, l'étage RF des cellules radiofréquences comprend une couche de cuivre partielle, assurant le déphasage radiofréquence, disposée entre la couche diélectrique porteuse et la couche radioélectriquement isolante, ou sur la couche radioélectriquement isolante.

Selon un mode de réalisation, les cellules radiofréquences sont d'épaisseur réduite comprise 5 et 10 mm pour le cas de la bande de fréquences S.

Ainsi la masse portée par le support structural reste limitée.

Dans un mode de réalisation, une liaison complète (également appelée point fixe) comprend :
- une vis ;
- un insert taraudé dans la tuile radiofréquence ;
- un insert taraudé dans le support structural ;
- une entretoise épaulée pour assurer un espacement entre la tuile radiofréquence et le support structural et un centrage des éléments de la liaison complète, et munie d'un alésage pour la vis ; et
- une rondelle entre la tête de la vis et l'insert dans le support plan.

Ainsi, la direction des glissements dans le plan apparait comme contrôlée et la direction des glissements hors du plan reste bridée.

Selon un mode de réalisation, une liaison de type glissière comprend :
- une vis ;
- un insert taraudé dans la tuile radiofréquence ;
- un insert taraudé dans le support structural ;
- une entretoise épaulée assurant un espacement entre la tuile radiofréquence et le support structural et un centrage des éléments de la liaison de type glissière, et munie d'un alésage pour la vis ;
- une rondelle ressort entre l'entretoise et l'insert dans le support pour calibrer l'effort exercé par la vis ; et
- un trou oblong permettant une zone de glissement de la vis, entre l'entretoise et l'insert taraudé selon l'axe de la liaison de type glissière.

Ainsi, la direction des glissements dans le plan apparait comme contrôlée et la direction des glissements hors du plan reste bridée.

Dans un mode de réalisation, une liaison de type glissière (6) comprend :
- une poutre en "I" assurant un espacement entre la tuile radiofréquence et le support structural, comprenant une aile inférieure, une âme et une aile supérieure avec taraudage ;
- une couche de colle fixant l'aile inférieure au support structural ;
- un insert dans la tuile, avec alésage ;
- une vis ; et
- une rondelle entre la tête de la vis et l'insert dans la tuile radiofréquence.

Ainsi, la direction des glissements dans le plan apparait comme contrôlée et la direction des glissements hors du plan reste bridée.

Selon un mode de réalisation, une liaison de type glissière comprend :
- une glissière ;
- une couche de colle fixant la glissière au support structural ;
- une poutre en "I" assurant un espacement entre la tuile radiofréquence et le support structural, comprenant une aile inférieure formant un coulisseau dans la glissière, une âme et une aile supérieure avec taraudage ;
- un insert dans la tuile radiofréquence, avec alésage ;
- une vis ; et
- une rondelle entre la tête de la vis et l'insert dans la tuile radiofréquence.

Ainsi, la direction des glissements dans le plan apparait comme contrôlée et la direction des glissements hors du plan reste bridée.

Selon un autre aspect de l'invention, il est également proposé un réseau réflecteur radiofréquence pour antenne de satellite comprenant au moins un panneau selon l'une des revendications précédentes, et des mécanismes d'assemblage et de déploiement.

L'invention sera mieux comprise à l'étude de quelques modes de réalisation décrits à titre d'exemples nullement limitatifs et illustrés par les dessins annexés sur lesquels :
- la figure 1 représente schématiquement des panneaux réseau réflecteurs de type ISARA, selon l'état de la technique ;
- la figure 2 illustre schématiquement les déplacements hors du plan en présence de gradients thermiques transverses à l'épaisseur du panneau Reflectarray, selon l'état de la technique ;
- la figure 3 illustre schématiquement un panneau réseau réflecteur radiofréquence pour antenne de satellite, selon un aspect de l'invention ;

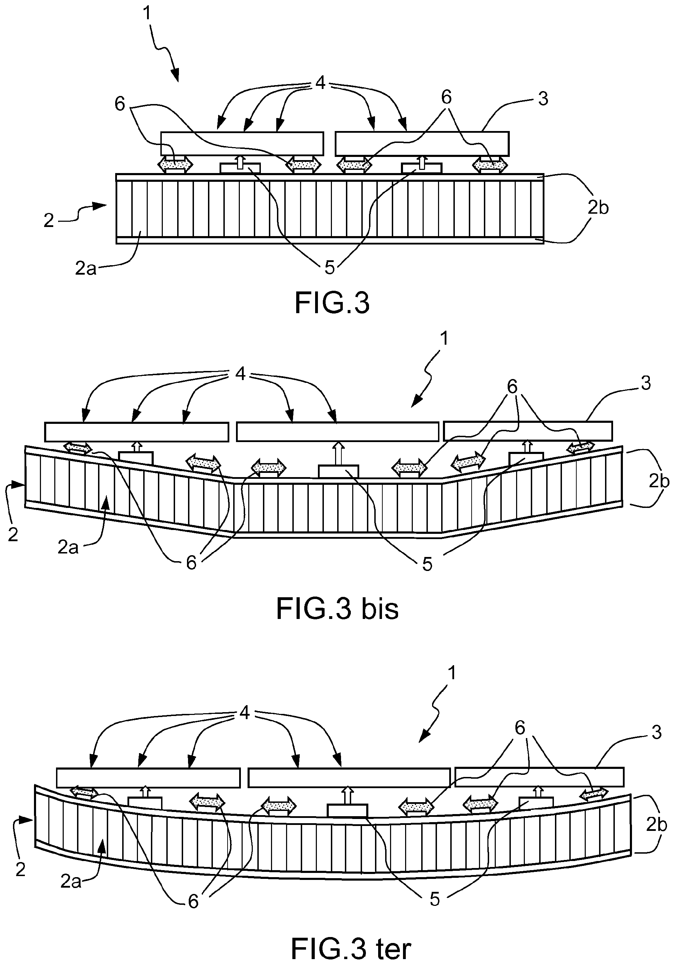

- La figure 3bis illustre schématiquement une variante de la figure 3, dans laquelle le support structural est à facettes, selon un aspect de l'invention ;
- La figure 3ter illustre schématiquement une variante de la figure 3, dans laquelle le support structural est convexe, selon un aspect de l'invention ;

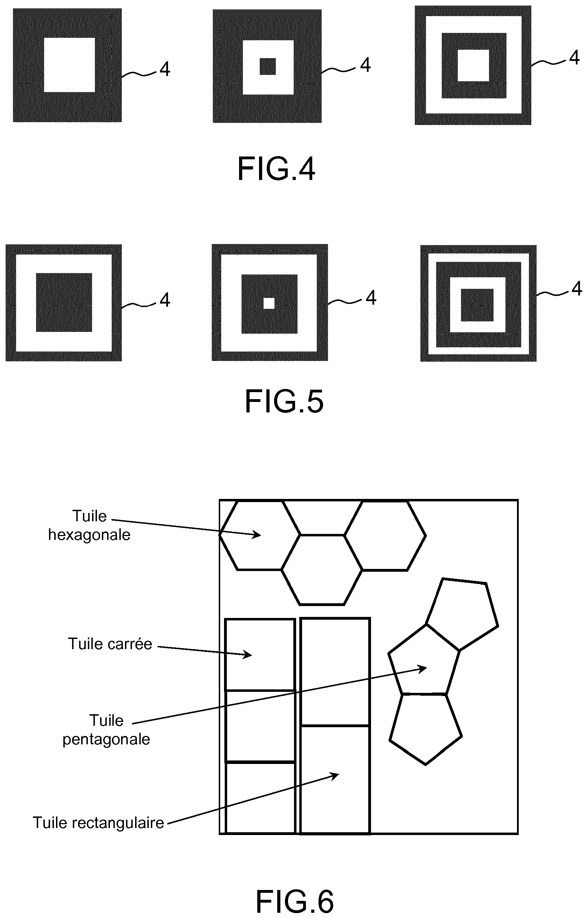

- la figure 4 illustre schématiquement des exemples de cellules radiofréquences au fonctionnement capacitif ou inductif, selon un aspect de l'invention ;
- la figure 5 illustre schématiquement des exemples de cellules radiofréquences au fonctionnement capacitif ou inductif, selon un aspect de l'invention ;
- la figure 6 illustre schématiquement des exemples de formes de tuiles radiofréquences possibles, selon un aspect de l'invention ;

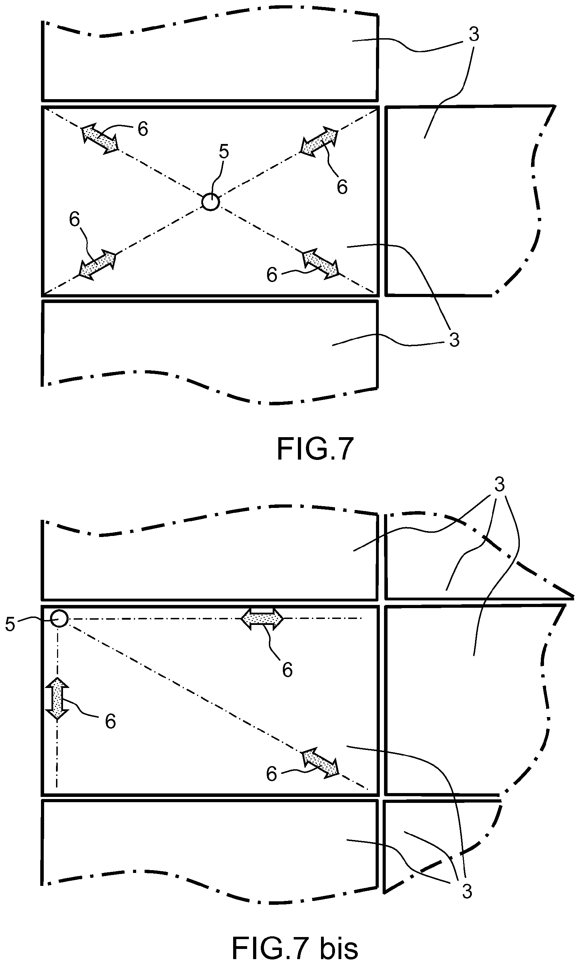

- la figure 7 illustre schématiquement un mode de fixation d'une tuile radiofréquence rectangulaire sur son panneau structural, sensiblement au barycentre de la tuile, selon un aspect de l'invention ;
- la figure 7bis illustre schématiquement un mode de fixation d'une tuile radiofréquence rectangulaire sur son panneau structural, sur un bord de la tuile, selon un aspect de l'invention ;

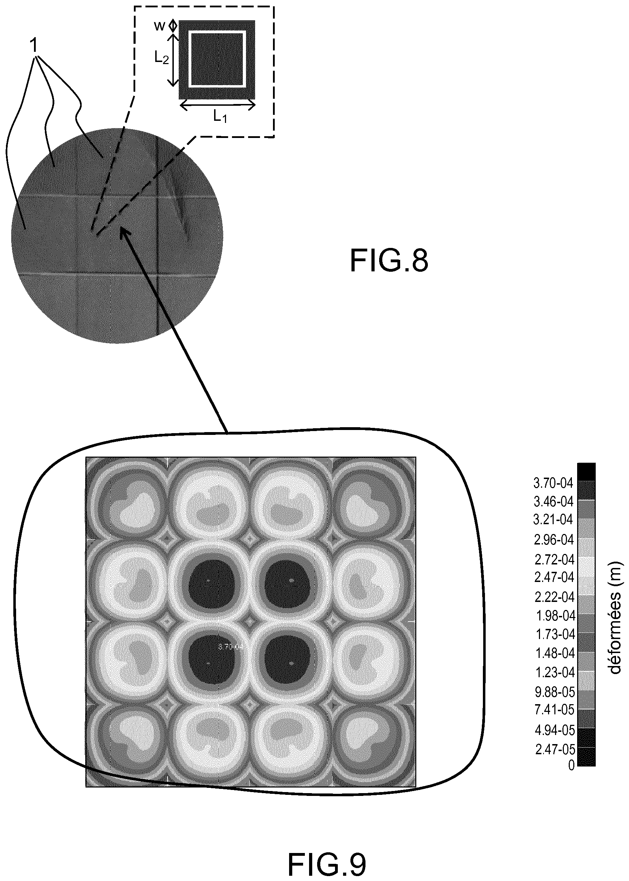

- les figures 8 et 9 illustrent schématiquement des cellules radiofréquences carrées, et les déformées globales du Produit Reflectarray en version multipanneaux sous cas de chargement thermique transverse selon un aspect de l'invention ;

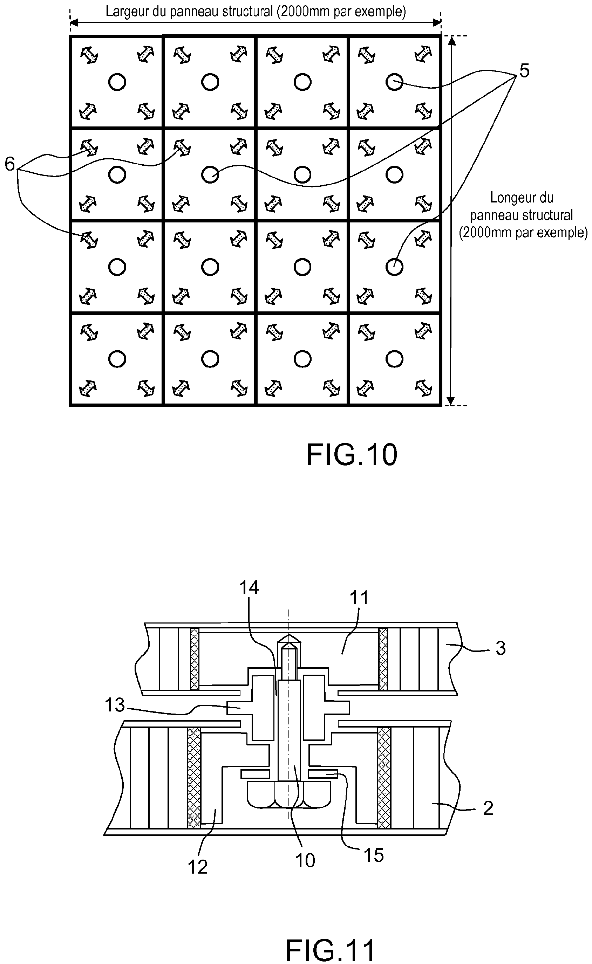

- la figure 10 représente un exemple de panneau Reflectarray carré équipé de tuiles radiofréquences carrées, par exemple de dimensions 2 m × 2 m, selon un aspect de l'invention ;
- la figure 11 illustre schématiquement une liaison complète (également nommée point fixe d'une tuile radiofréquence), selon un aspect de l'invention ; et

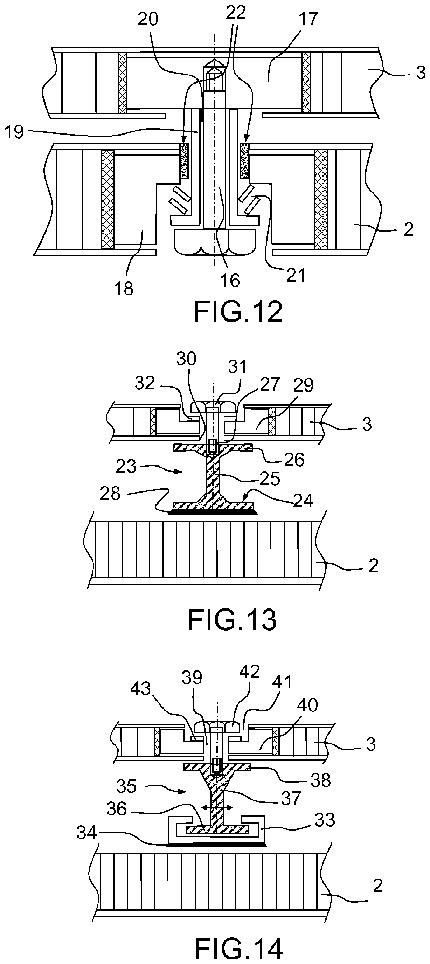

- les figures 12, 13 et 14 illustrent schématiquement des liaisons de type glissière, selon divers aspects de l'invention.

Sur l'ensemble des figures, les éléments ayant des références identiques sont similaires.

La figure 3 représente un panneau réseau réflecteur radiofréquences 1 selon un aspect de l'invention, en coupe, comprenant :
- un support structural 2 ;
- des tuiles radiofréquences 3 supportant des cellules radiofréquences polygonales 4 configurées pour réfléchir et déphaser des signaux radiofréquences incidents ;
- une liaison complète 5, entre le support structural 2 et la tuile radiofréquence 3 ; et
- au moins deux liaisons de type glissière 6, entre le support structural 2 et la tuile radiofréquence 3, dans le plan du panneau 1, d'axes distincts et passant par la liaison complète 5.

La liaison complète 5 peut être située au milieu d'une tuile ou en bordure de tuile.

Le support structural 2 comprend une couche espaceur 2a revêtue de deux peaux 2b en matériau orthotrope drapé, d'épaisseur inférieure à 1 mm, configuré pour assurer un module d'Young équivalent quasi isotrope compris entre 100 et 200 GPa, et un coefficient de dilatation thermique inférieur ou égal à 3 ppm/°C.

On entend par support structural 2, un support assurant les fonctions de raideur globale du produit Reflectarray tant en configuration stockée que déployée, le passage des efforts au niveau des fixations des panneaux sur la plateforme, la fixation des charnières de déploiement inter-panneaux Reflectarray, ainsi que la fixation des tuiles RF.

Le support structural 2 peut être plan ou non, par exemple il peut être à facettes ou convexe, comme respectivement illustré sur les figure 3bis et 3 ter.

La couche espaceur 2a peut être en nid d'abeilles, et/ou en assemblage de barres, et/ou en mousse.

L'étage des cellules 4 radiofréquences, ou en d'autres termes l'ensemble des tuiles RF, comprend un empilement d'une couche diélectrique porteuse, recouverte d'une couche stable radioélectriquement isolante dans une plage étendue de températures comprise entre -130°C et +150°C]. Cette couche isolante est assurée par exemple, par une couche de Kapton (marque déposée) correspondant à un laminé de type poly-imide.

Une cellule 4 peut comprendre une couche de cuivre partielle, assurant le déphasage radiofréquence, comprise disposée entre la couche diélectrique porteuse et la couche radioélectriquement isolante, ou sur la couche radioélectriquement isolante.

Les cellules radiofréquences ont une épaisseur réduite comprise 5 et 10 mm en bande S, ce qui permet de limiter la masse portée sur le support structural 2 du panneau 1.

La mise au point de telles cellules radiofréquences impose de rebâtir sa propre base de données permettant d'assurer la synthèse RF du panneau Reflectarray 1. Il faut choisir les cellules adaptées au déphasage local à réaliser, et choisir entre conception capacitive ou inductive.

La figure 4 représente schématiquement des cellules radiofréquences au fonctionnement capacitif, d'ordre 1, d'ordre 2 et d'ordre 3.

La figure 5 représente schématiquement des cellules radiofréquences au fonctionnement inductif, d'ordre 1, d'ordre 2 et d'ordre 3.

Une telle cellule radiofréquence 4, d'une épaisseur non usuelle assure un fonctionnement avec un étage RF d'épaisseur λ/8, alors que l'état de l'art RF retient une épaisseur minimale de λ/4, λ représentant la longueur d'onde.

L'avantage principal de cet artifice réside dans la réduction de masse induite du panneau 1, tout comme sa compacité accrue en configuration stockée (i.e. non déployée) le rendant compatible avec un volume sous coiffe jusqu'à des diamètres d'ouverture de 6 m à 7m.

La figure 6 représente schématiquement diverses formes de tuiles radiofréquences 3 en formes de polygones, en l'espèce en forme de polygones réguliers, comme des tuiles carrées, des tuiles rectangulaires, des tuiles en forme de pentagones réguliers, ou des tuiles hexagonales.

La découpe de telles tuiles est faite de façon à limiter les impacts RF, tout en conciliant notamment les exigences fonctionnelles suivantes :
- tolérance de fabrication d'une tuile radiofréquence (RF), et jeu inter-tuiles nécessaire lors de l'assemblage du panneau structural ;
- éviter les zones RF neutralisées par des fonctions non RF incontournables: fixation des HRM (assurant la fixation de l'assemblage des panneaux Reflectarray sur la plateforme lors de la phase de lancement), fixation des ferrures inter-panneaux 1, fixation de l'écran thermique (élément assurant le contrôle thermique passif du panneau Reflecteur sur sa face avant) ou "sunshield" en langue anglaise recouvrant la face active du panneau 1 ;
- minimisation des déformées de fabrication d'une tuile RF élémentaire 3 ;
- minimisation des déformées en orbite sous chargement de type gradient thermique transverse, compte tenu du système de report considéré entre une tuile RF 3 et le support structural 2.

L'agencement de l'étage RF est découpé en tuiles disjointes 3 afin de pallier une stabilité géométrique intrinsèque insuffisante (restant pilotée par les CTE élevés des matériaux diélectriques constitutifs).

La figure 7 illustre schématiquement une tuile radiofréquence rectangulaire, selon un aspect de l'invention, avec la liaison complète (appelée point fixe) 5 et au barycentre de la tuile 3. Quatre liaisons de type glissière 6 concourantes dans le plan du panneau 1, et par exemple selon les diagonales de la tuile RF rectangulaire 3.

La liaison complète 5 peut être assurée par collage ou toute autre forme de fixation mécanique à base de vis, rivet, ...

Les liaisons de type glissière 6 peuvent être assurées par collage souple (colle silicone ou équivalente), ou par tout autre dispositif assurant une translation libre radialement dans le plan de la tuile 3.

La figure 7bis illustre une variante de la figure 7, dans laquelle la liaison complète (appelée point fixe) 5 est disposée sur le bord de la tuile 3, par exemple dans un coin pour une tuile radiofréquence rectangulaire. Une telle tuile 3 comprend trois liaisons de type glissière 6, par exemple disposées comme sur la figure 7bis.

La figure 8 représente schématiquement un produit Reflectarray réalisé par un assemblage de panneaux 1 déployés de sorte que la forme globale offerte par l'ouverture s'approche au plus près de la parabole mère du réflecteur équivalent de l'antenne.

Chacun des panneaux 1 (en l'espèce au nombre de 9 pour une antenne de 6m d'ouverture), est équipé de Tuiles RF (par exemple au nombre de 16) de sorte que les déformations en orbite restent pilotées par le panneau structural porteur (chacune des tuiles RF voit alors ses dilatations hors du plan bridées par le dispositif proposé, tandis que les déformées globales au niveau du panneau structural typiquement de 2m x 2m restent faibles de par l'architecture retenue pour ce dernier (associée à un choix judicieux des matériaux mis en œuvre: par exemple peaux CFRP (fibres de carbone imprégnées de résine organique) à faible CTE). Ainsi les déformations hors du plan intrinsèques à la tuile RF (de type bilame induit par les gradients thermiques transverses) se trouvent limitées à celles du panneau porteur (c'est-à-dire compatible de la mission antenne (en Bande S, on recherche des déformées au niveau du plan inférieures à 3mm, et dans le plan inférieures à 3mm)).

La figure 9 représente la déformée induite en orbite sous cas de gradient thermique transverse qui reste le pire cas (en considérant comme référence le bord du panneau structural). La déformée hors du plan maximale se trouve localisée au centre du panneau 1, avec une déformée globale maitrisée, et des niveaux de déformée sur chacune des tuiles élémentaires <1mm (devenues donc compatible de la mission antenne).

La figure 10 représente un exemple de panneau carré à tuiles carrées 3, par exemple de dimensions 2 m x2 m.

La figure 11 représente un exemple de liaison complète ou point fixe 5 comprenant :
- une vis 10 ;
- un insert taraudé 11 dans la tuile radiofréquence 3 ;
- un insert taraudé 12 dans le support structural 2 ;
- une entretoise 13 épaulée pour assurer un espacement entre la tuile radiofréquence 3 et le support structural 2 et un centrage des éléments de la liaison complète 5, et munie d'un alésage 14 pour la vis 10 ; et
- une rondelle 15 entre la tête de la vis 10 et l'insert 12 dans le support plan 2.

La figure 12 représente un exemple de liaison de type glissière 6 comprend :
- une vis 16 ;
- un insert taraudé 17 dans la tuile radiofréquence 3 ;
- un insert taraudé 18 dans le support structural 2 ;
- une entretoise épaulée 19 assurant un espacement entre la tuile radiofréquence 3 et le support structural 2 et un centrage des éléments de la liaison de type glissière 6, et munie d'un alésage 20 pour la vis 16;
- une rondelle ressort 21 entre l'entretoise 19 et l'insert 18 dans le support 2 pour calibrer l'effort exercé par la vis 16 ; et
- un trou oblong 22 permettant une zone de glissement de la vis 16, entre l'entretoise 19 et l'insert taraudé 18 selon l'axe de la liaison de type glissière 6.

La figure 13 représente un autre exemple de liaison de type glissière 6 comprend :
- une poutre en "I" 23 assurant un espacement entre la tuile radiofréquence 3 et le support structural 2, comprenant une aile inférieure 24, une âme 25 et une aile supérieure 26 avec taraudage 27 ;
- une couche de colle 28 fixant l'aile inférieure 24 au support structural 2;
- un insert 29 dans la tuile 3, avec alésage 30 ;
- une vis 31 ; et
- une rondelle 32 entre la tête de la vis 31 et l'insert 29 dans la tuile radiofréquence 3.

La figure 14 représente un autre exemple de liaison de type glissière 6 comprend :
- une glissière 33 ;
- une couche de colle 34 fixant la glissière 33 au support structural 2 ;
- une poutre en "I" 35 assurant un espacement entre la tuile radiofréquence 3 et le support structural 2, comprenant une aile inférieure 36 formant un coulisseau dans la glissière 33, une âme 37 et une aile supérieure 38 avec taraudage 39 ;
- un insert 40 dans la tuile radiofréquence 3, avec alésage 41 ;
- une vis 42 ; et
- une rondelle 43 entre la tête de la vis 42 et l'insert 40 dans la tuile radiofréquence 3.

L'invention est dévolue aux applications de type panneaux Reflecarray ou réflecteur polarisant embarqués à bord de satellites.

Il permet de s'affranchir des CTE (coefficients de dilatation thermique) élevés intrinsèques aux matériaux diélectriques commercialement disponibles (lesquels restent actuellement incontournables pour leurs propriétés RF impératives pour la mission). L'invention permet de limiter/brider les déformations hors du plan des tuiles RF en orbite, de sorte que les performances RF nécessaires soient garanties.

## Revendications

1. Panneau réseau réflecteur radiofréquence (1) pour antenne de satellite, comprenant :
- un support structural (2) ;
- des tuiles radiofréquences (3) supportant des cellules radiofréquences polygonales (4) configurées pour réfléchir et déphaser des signaux radiofréquences incidents ;
- une liaison complète (5), entre le support structural (2) et une tuile radiofréquence (3) ; et **caractérisé en ce que** le panneau (1) comprend
- au moins deux liaisons de type glissière (6), entre le support structural (2) et la tuile radiofréquence (3), dans le plan du panneau (1), d'axes distincts et passant par la liaison complète (5).

2. Panneau (1) selon la revendication 1, dans lequel ladite liaison complète (5) est disposée au barycentre de la tuile radiofréquence (3).

3. Panneau (1) selon la revendication 1, dans lequel ladite liaison complète (5) est disposée au bord de la tuile radiofréquence (3).

4. Panneau (1) selon l'une des revendications précédentes, dans lequel le support structural (2) comprend une couche espaceur (2a) revêtue de deux peaux (2b) en matériau orthotrope drapé, d'épaisseur inférieure à 1 mm, configuré pour assurer un module d'Young équivalent quasi isotrope compris entre 100 et 200 GPa, et un coefficient de dilatation thermique inférieur ou égal à 3 ppm/°C.

5. Panneau (1) selon la revendication 4, dans lequel la couche espaceur (2a) est en nid d'abeilles, et/ou en assemblage de barres, et/ou en mousse.

6. Panneau (1) selon l'une des revendications précédentes, dans lequel une cellule radiofréquence (4) comprend un empilement d'une couche diélectrique porteuse, recouverte d'une couche stable radioélectriquement isolante dans une plage étendue de températures comprise entre -130°C et +150°C.

7. Panneau (1) selon la revendication 6, dans lequel la couche stable radioélectriquement isolante est un laminé de type poly-imide, tel du Kapton (marque déposée).

8. Panneau (1), selon la revendication 6 ou 7, dans lequel une cellule radiofréquence (4) comprend une couche de cuivre partielle, assurant le déphasage radiofréquence, disposée entre la couche diélectrique porteuse et la couche radioélectriquement isolante, ou sur la couche radioélectriquement isolante.

9. Panneau (1) selon l'une des revendications précédentes, dans lequel les cellules radiofréquences (4) sont d'épaisseur réduite comprise 5 et 10 mm pour le cas de la bande de fréquences S.

10. Panneau (1) selon l'une des revendications précédentes, dans lequel une liaison complète (5) comprend :
- une vis (10) ;
- un insert taraudé (11) dans la tuile radiofréquence (3) ;
- un insert taraudé (12) dans le support structural (2) ;
- une entretoise (13) épaulée pour assurer un espacement entre la tuile radiofréquence (3) et le support structural (2) et un centrage des éléments de la liaison complète (5), et munie d'un alésage (14) pour la vis (10) ; et
- une rondelle (15) entre la tête de la vis (10) et l'insert (12) dans le support plan (2).

11. Panneau (1) selon l'une des revendications 1 à 10, dans lequel une liaison de type glissière (6) comprend :
- une vis (16) ;
- un insert taraudé (17) dans la tuile radiofréquence (3) ;
- un insert taraudé (18) dans le support structural (2) ;
- une entretoise épaulée (19) assurant un espacement entre la tuile radiofréquence (3) et le support structural (2) et un centrage des éléments de la liaison de type glissière (6), et munie d'un alésage (20) pour la vis (16) ;
- une rondelle ressort (21) entre l'entretoise (19) et l'insert (18) dans le support (2) pour calibrer l'effort exercé par la vis (16) ; et
- un trou oblong (22) permettant une zone de glissement de la vis (16), entre l'entretoise (19) et l'insert taraudé (18) selon l'axe de la liaison de type glissière (6).

12. Panneau (1) selon l'une des revendications 1 à 10, dans lequel une liaison de type glissière (6) comprend :
- une poutre en "I" (23) assurant un espacement entre la tuile radiofréquence (3) et le support structural (2), comprenant une aile inférieure (24), une âme (25) et une aile supérieure (26) avec taraudage (27) ;
- une couche de colle (28) fixant l'aile inférieure (24) au support structural (2) ;
- un insert (29) dans la tuile (3), avec alésage (30) ;
- une vis (31) ; et
- une rondelle (32) entre la tête de la vis (31) et l'insert (29) dans la tuile radiofréquence (3).

13. Panneau (1) selon l'une des revendications 1 à 10, dans lequel une liaison de type glissière (6) comprend :
- une glissière (33) ;
- une couche de colle (34) fixant la glissière (33) au support structural (2) ;
- une poutre en "I" (35) assurant un espacement entre la tuile radiofréquence (3) et le support structural (2), comprenant une aile inférieure (36) formant un coulisseau dans la glissière (33), une âme (37) et une aile supérieure (38) avec taraudage (39) ;
- un insert (40) dans la tuile radiofréquence (3), avec alésage (41) ;
- une vis (42) ; et
- une rondelle (43) entre la tête de la vis (42) et l'insert (40) dans la tuile radiofréquence (3).

14. Réseau réflecteur radiofréquence pour antenne de satellite comprenant au moins un panneau selon l'une des revendications précédentes, et des mécanismes d'assemblage et de déploiement.

## Patentansprüche

1. Radiofrequenz-Reflektor-Array-Platte (1) für eine Satellitenantenne, die Folgendes umfasst:
- einen Strukturtäger (2);
- Radiofrequenzkacheln (3), die polygonale Radiofrequenzzellen (4) tragen, die zum Reflektieren und Phasenverschieben von einfallenden Radiofrequenzsignalen konfiguriert sind;
- eine feste Verbindung (5) zwischen dem Strukturträger (2) und einer Radiofrequenzkachel (3); und **dadurch gekennzeichnet, dass** die Platte (1) Folgendes umfasst:
- mindestens zwei verschiebbare Verbindungen (6) zwischen dem Strukturträger (2) und der Radiofrequenzplatte (3), in der Ebene der Platte (1), von unterschiedlichen Achsen, die durch die feste Verbindung (5) verlaufen.

2. Platte (1) nach Anspruch 1, wobei die feste Verbindung (5) im Baryzentrum der Radiofrequenzkachel (3) angeordnet ist.

3. Platte (1) nach Anspruch 1, wobei die feste Verbindung (5) am Rand der Radiofrequenzkachel (3) angeordnet ist.

4. Platte (1) nach einem der vorherigen Ansprüche, wobei der Strukturträger (2) eine Abstandsschicht (2a) umfasst, die mit zwei Lagen (2b) aus drapiertem orthotropem Material mit einer Dicke von weniger als 1 mm bedeckt ist, konfiguriert zum Gewährleisten eines äquivalenten quasi-isotropen Elastizitätsmoduls zwischen 100 und 200 GPa und eines Wärmeausdehnungskoeffizienten von kleiner als oder gleich 3 ppm/°C.

5. Platte (1) nach Anspruch 4, wobei die Abstandsschicht (2a) wabenförmig und/oder aus Stäben und/oder aus Schaumstoff ist.

6. Platte (1) nach einem der vorherigen Ansprüche, wobei eine Radiofrequenzzelle (4) einen Stapel aus einer dielektrischen Trägerschicht umfasst, die mit einer stabilen radioelektrisch isolierenden Schicht in einem erweiterten Temperaturbereich von -130°C bis +150°C bedeckt ist.

7. Platte (1) nach Anspruch 6, wobei die stabile radioelektrisch isolierende Schicht ein Polyimid-Laminat wie z.B. Kapton (eingetragene Marke) ist.

8. Platte (1) nach Anspruch 6 oder 7, wobei eine Radiofrequenzzelle (4) eine partielle Kupferschicht umfasst, die eine Radiofrequenz-Phasenverschiebung gewährleistet, welche zwischen der dielektrischen Trägerschicht und der radioelektrisch isolierenden Schicht oder auf der radioelektrisch isolierenden Schicht angeordnet ist.

9. Platte (1) nach einem der vorherigen Ansprüche, wobei die Radiofrequenzzellen (4) eine reduzierte Dicke zwischen 5 und 10 mm für den Fall des S-Frequenzbandes aufweisen.

10. Platte (1) nach einem der vorherigen Ansprüche, wobei eine feste Verbindung (5) Folgendes umfasst:
- eine Schraube (10);
- einen Gewindeeinsatz (11) in der Radiofrequenzkachel (3);
- einen Gewindeeinsatz (12) im Strukturträger (2);
- einen Abstandshalter (13), der abgestuft ist, um einen Abstand zwischen der Radiofrequenzkachel (3) und dem Strukturträger (2) und eine Zentrierung der Elemente der festen Verbindung (5) zu gewährleisten, und der mit einer Bohrung (14) für die Schraube (10) versehen ist; und
- eine Zwischenscheibe (15) zwischen dem Kopf der Schraube (10) und dem Einsatz (12) im ebenen Träger (2).

11. Platte (1) nach einem der Ansprüche 1 bis 10, wobei eine verschiebbare Verbindung (6) Folgendes umfasst:
- eine Schraube (16);
- einen Gewindeeinsatz (17) in der Radiofrequenzkachel (3);
- einen Gewindeeinsatz (18) im Strukturträger (2);
- einen abgestuften Abstandshalter (19), der einen Abstand zwischen der Radiofrequenzkachel (3) und dem Strukturträger (2) und eine Zentrierung der Elemente der verschiebbaren Verbindung (6) gewährleistet und mit einer Bohrung (20) für die Schraube (16) versehen ist;
- einen Federring (21) zwischen dem Abstandshalter (19) und dem Einsatz (18) im Träger (2), um die von der Schraube (16) ausgeübte Kraft zu kalibrieren; und
- ein Langloch (22), das eine Gleitzone der Schraube (16) ermöglicht, zwischen dem Abstandshalter (19) und dem Gewindeeinsatz (18) entlang der Achse der verschiebbaren Verbindung (6).

12. Platte (1) nach einem der Ansprüche 1 bis 10, wobei eine verschiebbare Verbindung (6) Folgendes umfasst:
- einen "I"-Träger (23), der einen Abstand zwischen der Radiofrequenzkachel (3) und dem Strukturträger (2) gewährleistet, welchereinen unteren Flansch (24), einen Steg (25) und einen oberen Flansch (26) mit einem Innengewinde (27) umfasst;
- eine Klebstoffschicht (28), die den unteren Flansch (24) am Strukturträger (2) befestigt;
- einen Einsatz (29) in der Kachel (3), mit einer Bohrung (30);
- eine Schraube (31); und
- eine Zwischenscheibe (32) zwischen dem Kopf der Schraube (31) und dem Einsatz (29) in der Radiofrequenzplatte (3).

13. Platte (1) nach einem der Ansprüche 1 bis 10, wobei eine verschiebbare Verbindung (6) Folgendes umfasst:
- einen Schlitten (33);
- eine Klebstoffschicht (34), die den Schlitten (33) am Strukturträger (2) befestigt
- einen I-Träger (35), der einen Abstand zwischen der Radiofrequenzkachel (3) und dem Strukturträger (2) gewährleistet, umfassend einen unteren Flansch (36), der eine Führung im Schlitten (33) bildet, einen Steg (37) und einen oberen Flansch (38) mit einem Innengewinde (39);
- einen Einsatz (40) in der Radiofrequenzkachel (3), mit einer Bohrung (41);
- eine Schraube (42); und
- eine Zwischenscheibe (43) zwischen dem Kopf der Schraube (42) und dem Einsatz (40) in der Radiofrequenzkachel (3).

14. Radiofrequenz-Reflektor-Array für eine Satellitenantenne umfassend mindestens eine Platte nach einem der vorherigen Ansprüche, und Montage- und Entfaltungsmechanismen.

## Claims

1. Radiofrequency reflective array panel (1) for satellite antenna, comprising:
- a structural support (2);
- radiofrequency tiles (3) supporting polygonal radiofrequency cells (4) configured to reflect and phase-shift incident radiofrequency signals;
- a complete link (5), between the structural support (2) and a radiofrequency tile (3); and **characterized in that** the panel (1) comprises :
- at least two runner-type links (6), between the structural support (2) and the radiofrequency tile (3), in the plane of the panel (1), of distinct axes and passing through the complete link (5).

2. Panel (1) according to claim 1, wherein said complete link (5) is disposed at the barycentre of the radiofrequency tile (3).

3. Panel (1) according to claim 1, wherein said complete link (5) is disposed at the edge of the radiofrequency tile (3).

4. Panel (1) according to one of the preceding claims, wherein the structural support (2) comprises a spacer layer (2a) coated with two skins (2b) of draped orthotropic material, less than 1 mm thick, configured to ensure a quasi-isotropic equivalent Young's modulus lying between 100 and 200 GPa, and a coefficient of thermal expansion less than or equal to 3 ppm/°C.

5. Panel (1) according to claim 4, wherein the spacer layer (2a) is in the form of a honeycomb structure, and/or of an assembly of bars, and/or made of foam.

6. Panel (1) according to one of the preceding claims, wherein a radiofrequency cell (4) comprises a stacking of a supporting dielectric layer, covered with a stable layer that is insulating to radio frequencies within an extended range of temperatures lying between -130°C and +150°C.

7. Panel (1) according to claim 6, wherein the stable layer that is insulating to radio frequencies is a laminate of polyimide type, such as Kapton (registered trademark).

8. Panel (1), according to claim 6 or 7, wherein a radiofrequency cell (4) comprises a partial copper layer, ensuring the radiofrequency phase-shifting, disposed between the supporting dielectric layer and the layer that is insulating to radio frequencies, or on the layer that is insulating to radio frequencies.

9. Panel (1) according to one of the preceding claims, wherein the radiofrequency cells (4) have a reduced thickness of between 5 and 10 mm for the case of the frequency band S.

10. Panel (1) according to one of the preceding claims, wherein a complete link (5) comprises:
- a screw (10);
- a tapped insert (11) in the radiofrequency tile (3);
- a tapped insert (12) in the structural support (2);
- a shouldered spacer (13) to ensure a spacing between the radiofrequency tile (3) and the structural support (2) and a centring of the elements of the complete link (5), and provided with a bore (14) for the screw (10); and
- a washer (15) between the head of the screw (10) and the insert (12) in the planar support (2).

11. Panel (1) according to one of claims 1 to 10, wherein a runner-type link (6) comprises:
- a screw (16);
- a tapped insert (17) in the radiofrequency tile (3);
- a tapped insert (18) in the structural support (2);
- a shouldered spacer (19) ensuring a spacing between the radiofrequency tile (3) and the structural support (2) and a centring of the elements of the runner-type link (6), and provided with a bore (20) for the screw (16);
- a spring washer (21) between the spacer (19) and the insert (18) in the support (2) to calibrate the effort exerted by the screw (16); and
- an oblong hole (22) allowing a sliding zone for the screw (16), between the spacer (19) and the tapped insert (18), along the axis of the runner-type link (6).

12. Panel (1) according to one of claims 1 to 10, wherein a runner-type link (6) comprises:
- an "I" beam (23) ensuring a spacing between the radiofrequency tile (3) and the structural support (2), comprising a bottom flange (24), a web (25) and a top flange (26) with tapping (27);
- a layer of glue (28) fixing the bottom flange (24) to the structural support (2);
- an insert (29) in the tile (3), with bore (30);
- a screw (31); and
- a washer (32) between the head of the screw (31) and the insert (29) in the radiofrequency tile (3).

13. Panel (1) according to one of claims 1 to 10, wherein a runner-type link (6) comprises:
- a runner (33);
- a layer of glue (34) fixing the runner (33) to the structural support (2);
- an "I" beam (35) ensuring a spacing between the radiofrequency tile (3) and the structural support (2), comprising a bottom flange (36) forming a slide in the runner (33), a web (37) and a top flange (38) with tapping (39);
- an insert (40) in the radiofrequency tile (3), with bore (41);
- a screw (42); and
- a washer (43) between the head of the screw (42) and the insert (40) in the radiofrequency tile (3).

14. Radiofrequency reflective array for satellite antenna comprising at least one panel according to one of the preceding claims, and assembly and deployment mechanisms.
